# EUROPEAN PATENT APPLICATION

(11) **EP 3 145 202 A1**
(43) Date of publication of application: **22.03.2017**
(21) Application number: 16189752.5
(22) Date of filing: 20.09.2016
(51) Int. Cl.: H04N 21/254, H04N 21/81

(54) **DISPLAY APPARATUS AND CONTROL METHOD THEREOF**

(30) Priority: 21.09.2015 KR 20150133324
(71) Applicant: Samsung Electronics Co., Ltd., Suwon-si, Gyeonggi-do 16677 (KR)
(72) Inventor: LEE, Dong-il, 08807 Seoul (KR); LEE, Kyung-sun, 22795 Incheon (KR); HAN, Kum-yon, 16704 Gyeonggi-do (KR)
(74) Representative: Walaski, Jan Filip

(57) **Abstract**

A display apparatus is provided including: a display; a receiver configured to receive a broadcast signal that includes broadcast content and source information of service content corresponding to the broadcast content; communication circuitry configured to communicate with a server that provides the service content; at least one processor configured: to process the broadcast content received by the communication circuitry to be displayed as an image on the display, to display an image of the service content received using the source information from the server on the display while displaying the image of the broadcast content if it is determined, based on preset setting information, that the service content is allowed to be provided, and to prevent the image of the service content from being displayed while displaying the image of the broadcast content if it is determined, based on the setting information, that the service content is not allowed to be provided.

## Description

The present invention relates generally to a display apparatus capable of displaying an image by receiving and processing a video signal, an application or the like content received from various providers and a control method thereof, and for example to a display apparatus having a structure for coping with a trouble caused by execution of additional content in a state that the additional content additionally provided by a provider of certain content is automatically run while displaying an image based on the certain content.

To compute and process predetermined information in accordance with certain processes, an electronic apparatus basically includes a central processing unit (CPU), a chipset, a memory, and the like electronic components for computation. Such an electronic apparatus may be classified variously in accordance with what information will be processed therein. For example, the electronic apparatus is classified into an information processing apparatus such as a personal computer, a server or the like for processing general information, and an image processing apparatus for processing image information.

The image processing apparatus processes an image signal or image data received from the exterior in accordance with various image processing processes. The image processing apparatus may display an image based on the processed image data on its own display panel, or output the processed image data to another display apparatus provided with a panel so that on the corresponding display apparatus can display an image based on the processed image signal. In particular, the image processing apparatus that has a display panel is called a display apparatus, and may for example includes a television (TV), a portable multimedia player (PMP), a tablet personal computer, a mobile phone, etc.

The display apparatus may receive data or a signal of content for displaying an image from various input sources. For example, if the display apparatus is a TV, the display apparatus may receive a video signal from a set-top box, receive a radio frequency (RF) signal through an antenna, receive a streaming data packet from a streaming server through a network, or receive reproduced data of an optical disc from a locally connected optical disc device. The display apparatus not only displays an image of content but also offers various services. For example, the display apparatus may offer a service of automatically displaying an image of additional content provided or designated by a broadcasting station while displaying a broadcast image received from the broadcasting station. This service is made by the broadcasting station in accordance with previously defined standards, so that the display apparatus can offer the corresponding service.

By the way, the service offered by the broadcasting station may cause an abnormal operation in the display apparatus. For instance, there may be troubles such as a slight trouble of causing a partial distortion in a displayed image, a serious trouble of causing an image not to be normally displayed or causing an error in execution of the display apparatus, etc. Such an abnormal operation may be caused when the service is not made pursuant to the previously defined standards. To solve this problem, the broadcasting station of making the service has to find the cause of the error, modify the service and offer the modified service again.

However, it takes certain time to find the cause of the error and modify the service, and therefore the display apparatus has to cope with the service causing the trouble and provide a normal viewing environment to a user during the certain time.

A display apparatus including: a display; a receiver configured to receive a broadcast signal that includes broadcast content and source information of service content corresponding to the broadcast content; communication circuitry configured to communicate with a server that provides the service content; at least one processor configured: to process the broadcast content received by the communication circuitry to be displayed as an image on the display, to display an image of the service content received using the source information from the server on the display while displaying the image of the broadcast content if it is determined, based on preset setting information, that the service content is allowed to be provided, and to prevent the image of the service content from being displayed while displaying the image of the broadcast content if it is determined, based on the setting information, that the service content is not allowed to be provided. Thus, if the service content causes an error in the display apparatus, the display apparatus blocks the execution of the service content and thus prevents and/or reduces the occurrence of the error caused by the service content.

The setting information may be set to block the source information of the service content, which is used by the at least one processor in acquiring the service content, so as to prevent the image of the service content from being displayed. Thus, the display apparatus is prevented from acquiring the service content in accordance with source information, thereby blocking the execution of the service content.

The source information may include at least one of address information of the service content, identification (ID) of the service content, and ID of a provider that provides the service content. Thus, if the execution of the service content is allowed, the display apparatus can easily acquire the service content.

The receiver may receive the broadcast signal through a unidirectional communication network, and the communication circuitry may access the server through a bidirectional communication network. Thus, the display apparatus acquires many types of content from various sources.

The source information may be recorded in application information table (AIT) data to be received in the signal receiver. Thus, the display apparatus can acquire the source information of the service content from the source of providing the broadcast content.

The at least one processor may display on the display a message for informing that a display of an image of the service content is blocked, if the setting information is set to block the display of the image of the service content. Thus, a user can readily recognize that the display apparatus blocks the service content.

The at least one processor may display on the display a user interface (UI) for allowing a user to select whether to display an image of the service content, if the setting information is set to select whether to display the image of the service content. Thus, a user can select whether to block the service content in the display apparatus.

The service content may include a web application to be executed on a browser program. Thus, the display apparatus can display the web application by driving a browser while a broadcast image is being displayed.

The setting information may be updated in real time with a list of the service content to be blocked, by a maintenance server that communicates with the communication circuitry. Thus, the display apparatus determines and blocks the application, which is reported to cause an error, in real time.

The service content designated to be blocked in the setting information may include service content, of which the number of report times is greater than a preset threshold, within service content reported to the maintenance server as causing an error.

Thus, there is no need of manually making the setting information by a separate manager, and the maintenance server automatically determines the service content causing the error and reflects the determination to the setting information.

A method of controlling a display apparatus, the method including: receiving a broadcast signal that includes broadcast content and source information of service content corresponding to the broadcast content, and displaying an image of the broadcast content; displaying an image of the service content received using the source information from the server while displaying the image of the broadcast content if it is determined based on preset setting information that the service content is allowed to be provided; and preventing the image of the service content from being displayed while displaying the image of the broadcast content if it is determined based on the setting information that the service content is not allowed to be provided. Thus, if the service content causes an error in the display apparatus, the display apparatus blocks the execution of the service content and thus prevents and/or reduces the occurrence of the error caused by the service content.

The setting information may be set to block the source information of the service content, which is used in acquiring the service content, so as to prevent the image of the service content from being displayed. Thus, the display apparatus is prevented from acquiring the service content in accordance with source information, thereby blocking the execution of the service content.

The source information may include at least one of address information of the service content, identification (ID) of the service content, and ID of a provider that provides the service content. Thus, if the execution of the service content is allowed, the display apparatus can easily acquire the service content.

The display apparatus may receive the broadcast signal through a unidirectional communication network, and may access the server through a bidirectional communication network. Thus, the display apparatus acquires many types of content from various sources.

The source information may be recorded in application information table (AIT) data extracted from the broadcast signal. Thus, the display apparatus can acquire the source information of the service content from the source of providing the broadcast content.

The method may further including displaying a message for informing that a display of an image of the service content is blocked, if the setting information is set to block the display of the image of the service content. Thus, a user can readily recognize that the display apparatus blocks the service content.

The method may further including displaying a user interface (UI) for allowing a user to select whether to display an image of the service content, if the setting information is set to select whether to display the image of the service content. Thus, a user can select whether to block the service content in the display apparatus.

The service content may include a web application to be executed on a browser program. Thus, the display apparatus can display the web application by driving a browser while a broadcast image is being displayed.

The setting information may be updated in real time with a list of the service content to be blocked, by a maintenance server that communicates with the communication circuitry. Thus, the display apparatus determines and blocks the application, which is reported to cause an error, in real time.

The service content designated to be blocked in the setting information may include service content, of which the number of report times is greater than a preset threshold, within service content reported to the maintenance server as causing an error.

Thus, there is no need of manually making the setting information by a separate manager, and the maintenance server automatically determines the service content causing the error and reflects the determination to the setting information.

The above and/or other aspects will become apparent and more readily appreciated from the following detailed description, taken in conjunction with the accompanying drawings, in which like reference numerals refer to like elements, and wherein:
FIG. 1 is a diagram illustrating an example system according to a first example embodiment;
FIG. 2 is a block diagram illustrating an example display apparatus according to a second example embodiment;
FIG. 3 is a block diagram illustrating example functional components for a broadcast network in the display apparatus according to the second example embodiment;
FIG. 4 is a block diagram illustrating example functional components for a broadband network in the display apparatus according to the second example embodiment;
FIG. 5 to FIG. 8 are diagrams illustrating example images displayed as an application auto-executing service is executed in a display apparatus according to a third example embodiment;
FIG. 9 is a diagram illustrating example signal exchange while a display apparatus according to a fourth example embodiment executes the application auto-executing service;
FIG. 10 is a diagram illustrating an example principle of blocking the application auto-executing service in a display apparatus according to a fifth example embodiment;
FIG. 11 is a flowchart illustrating an example of executing the application auto-executing service in the display apparatus according to the fifth example embodiment;
FIG. 12 illustrates an example of a configuration file, in which an application is designated to be blocked, referred to by a display apparatus according to a sixth example embodiment;
FIG. 13 is a diagram illustrating an example execution block message displayed when the display apparatus according to the sixth example embodiment blocks the application with reference to the configuration file of FIG. 12;
FIG. 14 illustrates an example of a configuration file, in which an application is designated to be blocked, referred to by a display apparatus according to a seventh example embodiment;
FIG. 15 is a diagram illustrating an example execution block message displayed when the display apparatus according to the seventh example embodiment blocks the application with reference to the configuration file of FIG. 14;
FIG. 16 is a diagram illustrating an example principle of blocking the application auto-executing service in a display apparatus according to an eighth example embodiment;
FIG. 17 and FIG. 18 are a flowchart illustrating an example of executing the application auto-executing service in the display apparatus according to the eighth example embodiment;
FIG. 19 and FIG. 20 are diagrams illustrating an example principle that a server generates a configuration file in a system according to a ninth example embodiment;
FIG. 21 is a flowchart illustrating an example of making a configuration file out by the server according to the ninth example embodiment.

Below, example embodiments will be described in detail with reference to accompanying drawings. The following descriptions of the example embodiments are made by referring to elements illustrated in the accompanying drawings, in which like numerals refer to like elements having substantively the same functions.

In the description of the example embodiments, an ordinal number used in terms such as a first element, a second element, etc. is employed for describing variety of elements, and the terms are used for distinguishing between one element and another element. Therefore, the meanings of the elements are not limited by the terms, and the terms are also used just for explaining the corresponding embodiment without limiting the idea of the disclosure.

Further, the example embodiments will describe elements directly related to the idea of the disclosure, and description of the other elements may be omitted. However, it will be appreciated that the elements, the descriptions of which are omitted, are not unnecessary to realize the apparatus or system according to the example embodiments. In the following descriptions, terms such as "include" or "have" refer to presence of features, numbers, steps, operations, elements or combination thereof, and do not exclude presence or addition of one or more other features, numbers, steps, operations, elements or combination thereof.

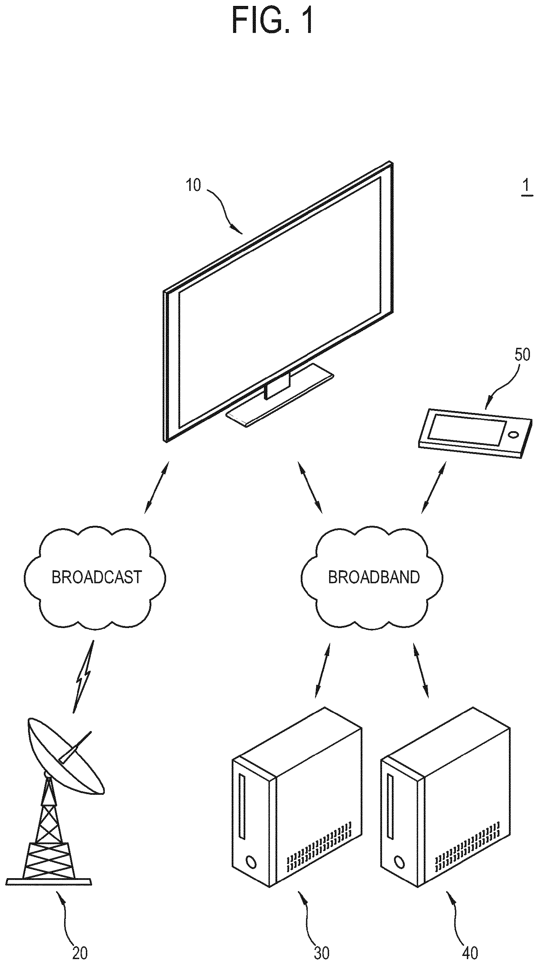

FIG. 1 is a diagram illustrating an example system 1 according to a first example embodiment.

As illustrated in FIG. 1, the system 1 according to the first example embodiment includes various content sources 20, 30 and 40 providing various types of content with respect to a display apparatus 10 regarded as a client terminal. As a platform of this system 1, there are hybrid broadcast broadband television (HbbTV) standards.

In the system 1 based on the HbbTV standards, the display apparatus 10 operates as a hybrid terminal to which networks corresponding to two types of broadcast and broadband are connected in parallel. The broadband is a method of using bidirectional internet protocol (IP) connection as a frequency band for streaming or downloading audio/video (A/V) content, and the broadcast is a classical unidirectional method such as of digital video broadcasting-terrestrial (DVB-T), DVB-satellite (S), DVB- cable (C), etc.

The display apparatus 10 can receive linear A/V content, non-real-time A/V content, application data, and application signaling information, etc. through a broadcast network. Although the display apparatus 10 is not connected to a broadband network, such a connection to the broadcast network allows the display apparatus 10 to receive a broadcast-related application. In addition, it is possible to make signaling of stream events about the application through the broadcast network.

The broadcast-related application refers to a broadcast TV, radio or data channel, or an interactive application related to content of the channel. On the other hand, a broadcast-independent application refers to an interactive application irrelevant to any broadcast channel or other broadcast data.

In addition, the display apparatus 10 may receive application data, nonlinear A/V content, etc. through the broadband network. The nonlinear A/V content refers to content, of which view time or reproducing point are freely selectable by a user like a Streaming on

Demand, but the linear A/V content refers to a push-type content which is viewable on only a certain time during which a provider provides it. Through the broadband network, the display apparatus 10 may connect with an external device 50 within the same local network.

Thus, the display apparatus 10 can receive content through the broadcast or broadband on the platform of the system 1 such as the HbbTV.

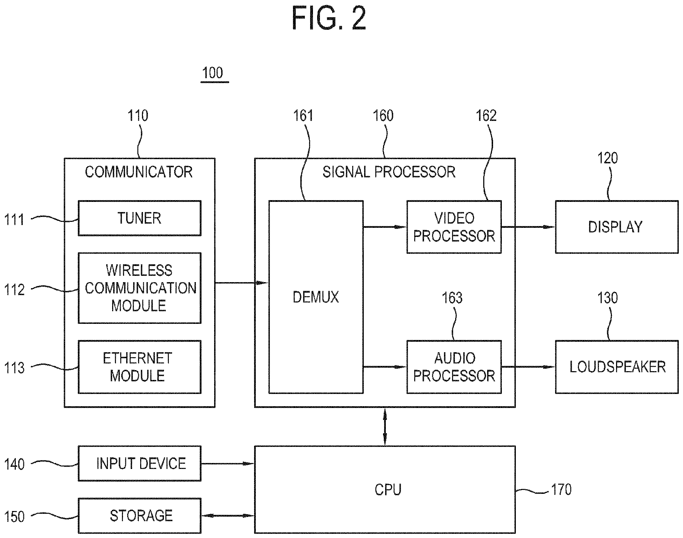

FIG. 2 is a block diagram illustrating an example display apparatus 100 according to a second example embodiment. The display apparatus 100 in this embodiment is applicable to the foregoing display apparatus 10 according to the first example embodiment.

As illustrated in FIG. 2, the display apparatus 100 according to the second example embodiment includes a communicator (e.g., including communication circuitry) 110 for communicating with the exterior, a display 120 for displaying an image based on video data of a transport stream received in the communicator 110, a loudspeaker 130 for outputting a sound based on audio data of the transport stream received in the communicator 110, an input device (e.g., including input circuitry)_140 for receiving a user's input, a storage 150 for storing data, a signal processor 160 for controlling and computing general operations of the display apparatus 100, and a central processing unit (CPU) 170 (e.g., processing circuitry) for computing and controlling operations of the signal processor 160.

In this example embodiment, the CPU 170 is provided independently of the signal processor 160, but not limited thereto. Alternatively, the CPU 170 may be integrated with various chipsets such as the signal processor 160, and thus may be provided as a single system on chip (SoC).

The communicator 110 may include various communication circuitry that performs interactive communication, which receives a transport stream from various content sources or data received from the signal processor 160 to the exterior. The communicator 110 may be achieved by an assembly of various communication circuitry, including, for example, communication ports or communication modules respectively corresponding to a plurality of communication standards, and its supportable protocols and communication targets are not limited to one kind or type.

For example, the communicator 110 may include various communication circuitry, such as, for example, and without limitation, a radio frequency integrated circuit (RFIC), a Bluetooth module, a wireless fidelity (Wi-Fi) module or the like wireless communication module 112 for wireless network communication; an Ethernet module 113 for wired network communication; a universal serial bus (USB) port (not shown) for local connection with a USB memory (not shown) or the like; an infrared sensor (not shown) for sensing infrared if the infrared is sent from a remote controller (not shown); and so on.

In this embodiment, the communication circuitry of the communicator 110 is connected to various content sources through each of a broadcast network and a broadband network, and receives content data from the respective content sources. Here, there are various ways that the communicator 110 receives content data from the respective content sources and selectively transmits the content data to the signal processor 160.

For example, the communicator 110 includes unit modules including various communication circuitry respectively taking charge of communication with the content sources and individually inactivated by the CPU 170, and transmits content data received in an activated unit module to the signal processor 160. Alternatively, the communicator 110 may transmit the content data from the unit module designated by the CPU 170 to the signal processor 160 while the unit modules are individually receiving the content data.

The display 120 displays an image based on a video signal processed by the signal processor 160. There are no limits to the types of the display 120. For example, the display 120 may be achieved by a non-emissive type such as a liquid crystal display (LCD) or a self-emissive type such as an organic light emitting diode (OLED) display panel. Further, the display 120 may include additional elements in addition to the display panel in accordance with the types of the display panel. For example, if the display 120 is achieved by the liquid crystal display, the display 130 includes a liquid crystal display (LCD) panel (not shown), a backlight unit (not shown) for emitting light to the LCD panel, and a panel driver (not shown) for driving the LCD panel (not shown).

The loudspeaker 130 outputs a sound based on an audio signal processed by the signal processor 160. The loudspeaker 130 vibrates air in accordance with an audio signal and changes air pressure to thereby make a sound. The loudspeaker 130 includes a unit loudspeaker provided corresponding to an audio signal of one channel. In this embodiment, the loudspeaker may include a plurality of unit loudspeakers respectively corresponding to audio signals of the plurality of channels.

There are various kinds of loudspeakers 130 in accordance with frequency bands of a sound to be output. The loudspeakers 130 include a sub-woofer corresponding to a frequency band of 20Hz to 99Hz, a woofer corresponding to a frequency band of 100Hz to 299Hz, a mid-woofer corresponding to a frequency band of 300Hz to 499Hz, a mid-range speaker corresponding to a frequency band of 500Hz to 2.9KHz, a tweeter speaker corresponding to a frequency band of 3KHz to 6.9KHz, and a super-tweeter speaker corresponding to a frequency band of 7KHz to 20KHz, in which one or more among them are selected and applied to the display apparatus 100.

The input device 140 may include various input circuitry that transmits various preset control commands or information to the CPU 170 or the signal processor 160 in accordance with a user's control or input. The input device 140 transmits various events, which occurs by a user's control in accordance with a user's intention, to the CPU 170 or the signal processor 160.

The input device 140 may be achieved using various input circuitry in accordance with information input methods. For example, the input device 140 may be include various input circuitry, such as, for example, and without limitation, a button placed at an outer side of the display apparatus 100, a touch screen placed in the display 120, a microphone (not shown) for receiving a user's utterance, a camera (not shown) for photographing or sensing surrounding environments of the display apparatus 100, or the like user interface provided in the display apparatus 100. The remote controller (not shown) may be also regarded as one of the user interface environments. In this case, the remote controller 60 is separated from the display apparatus 100 and transmits a control signal to the display apparatus 100 through the communicator 110.

The storage 150 stores various pieces of data under process and control of the CPU 170 and the signal processor 160. The storage 150 is accessed by the signal processor 160 and performs reading, writing, editing, deleting, updating or the like with regard to data. The storage 150 is achieved by a flash-memory, a hard-disc drive (HDD), a solid-state drive (SSD) or the like nonvolatile memory to preserve data regardless of supply of system power in the display apparatus 100.

The signal processor 160 performs various processes with regard to the transport stream received in the communication circuitry of the communicator 110. When the transport stream is received in the communicator 110, the signal processor 160 applies a video processing process to the video signal extracted from the transport stream, and outputs the processed video signal to the display 120, so that an image can be displayed on the display 120.

There is no limit to the kind of video processing process performed by the signal processor 160, and the video processing process may for example include de-multiplexing for dividing an input transport stream into sub streams such as a video signal, an audio signal and additional data, decoding corresponding to video formats of the video signal, de-interlacing for converting video data from an interlaced type into a progressive type, scaling for adjusting a video signal to have a preset resolution, noise reduction for improving image quality, detail enhancement, frame refresh rate conversion, etc.

The signal processor 160 may perform various processes in accordance with the kind and properties of a signal or data, and therefore the process of the signal processor 160 is not limited to the video processing process. Further, the data that can be processed by the signal processor 160 is not limited to data received in the communicator 110. For example, the signal processor 160 performs an audio processing process with regard to an audio signal extracted from the transport stream, and outputs such a processed audio signal to the loudspeaker 230. In addition, if a user's speech is input to the display apparatus 100, the signal processor 160 may process the speech in accordance with a preset voice recognition process. The signal processor 160 may be achieved in the form of a system-on-chip (SoC) where various functions corresponding to such processes are integrated, or an image processing board where individual chip-set for independently performing the respective processes are mounted to a printed circuit board.

The display apparatus 200 may have specifically different hardware components in accordance with the types of the display apparatus 100 and the functions supported by the display apparatus 100. For example, a hardware component to be tuned to a certain frequency for receiving a broadcast signal may be needed if the display apparatus 100 is a TV, but may be excluded if the display apparatus 100 is a tablet PC.

Below, the signal processor 160 of when the display apparatus 100 is the TV will be described in detail.

The accompanying drawings show only basic elements of the communicator 110 and the signal processor 160, and an actual product of the display apparatus 100 includes additional elements besides the elements set forth herein.

In this example embodiment, the signal processor 160 is divided into a plurality of processors 162, 163, but not limited thereto. In practice, such elements may be divided by hardware or may not be divided, or may be achieved by combination of hardware and software. Further, In this example embodiment, the signal processor 160 includes a video processor 162 and an audio processor 163, but not limited thereto. Alternatively, the signal processor 160 may further include various processors in accordance with support functions.

The communicator 110 may include various communication circuitry, including, for example, a tuner 111 to be tuned to a certain frequency to receive a broadcast stream, a wireless communication module 112 for wireless communication with the exterior, and an Ethernet module 113 for wired communication with the exterior.

Further, the signal processor 160 includes a deMUX 161 for dividing the transport stream received from the signal receiver 110 into a plurality of sub signals, a video processor 162 for processing a video signal among the sub signals output from the deMUX 161 in accordance with the video processing process and outputting the processed video signal to the display 120, an audio processor 163 for processing an audio signal among the sub signals output from the deMUX 161 in accordance with the audio processing process and outputting the processed audio signal to the loudspeaker 130.

When a broadcast stream is received in the tuner 111, the tuner 111 is tuned to a frequency of a designated channel to receive a broadcast stream and converts the broadcast stream into a transport stream. The tuner 111 converts a high frequency of a carrier wave into an intermediate frequency band and converts it into a digital signal, thereby generating a transport stream. To this end, the tuner 111 has an analog/digital (A/D) converter (not shown). Alternatively, the A/D converter (not shown) may be designed to be included in not the tuner 111 but a demodulator (not shown).

The wireless communication module 112 includes various communication circuitry configured to perform wireless communication corresponding to various protocols. These protocol includes wireless fidelity (Wi-Fi), Wi-Fi Direct, Bluetooth, Universal Plug And Play (UPNP), Near Field Communication (NFC), etc. The wireless communication module 112 includes unit modules for communication based on protocols in accordance with support protocols.

Below, the foregoing protocols will be described schematically.

Wi-Fi refers to a protocol of supporting wireless local area network based on institute of electrical and electronics engineers (IEEE) 802.11 and personal area network (PAN)/local area network (LAN)/wide area network (WAN), etc. In an infrastructure mode, Wi-Fi provides wireless communication relayed by access points (AP) in between devices. In case of IEEE 802.1n, Wi-Fi guarantees the maximum transmission speed of 300Mbps. The AP is connected to a router accessing an exterior WAN, and forms a hot spot of a predetermined range within an unclosed space. The display apparatus 100 is positioned within the hot spot around the AP and wirelessly accesses the AP, thereby connecting and communicating with a network via the AP. Here, the range of the hot spot may be expanded by additionally installing a repeater or the like device for amplifying a signal. However, it is not proper for a user to use Wi-Fi for the wireless communication while s/he is moving since the hot spot generally has a narrow range.

Wi-Fi Direct refers to a protocol which is based on peer-to-peer (P2P) and does not use the AP in Wi-Fi. Based on Wi-Fi Direct, the display apparatus 100 may directly connect and communicate with other devices without using the AP. Wi-Fi Direct guarantees the maximum transmission speed of 250Mbps within a distance of 200m between the devices.

Wi-Fi Direct utilizes a technique related to Ad-hoc among Wi-Fi techniques. An ad-hoc network is a communication network established with only mobile hosts without a stationary wired network. The ad-hoc network is suitable when it is difficult to establish the wired network or when it is used for a short time after establishing the network. The ad-hoc network has advantages that the network is quickly and inexpensively established since there is no limit to move the host and there is no need of a wired network and a base station. In the ad-hoc network, mobile nodes are used as not only hosts but also a kind of router, and multi-paths are set up with regard to other nodes or a path is dynamically set up. Wi-Fi Direct is a technique achieved to improve transmission speed and security by remedying the ad-hoc technique's shortcomings.

Wi-Fi Direct is fundamentally related to 1:1 connection, but 1:N connection is also possible. For instance, the display apparatus 100 has the following processes in order to connect and communicate with the mobile device or the like external device in accordance with a Wi-Fi Direct protocol. The mobile device sends a connection request message to the display apparatus 100 by a push method. If the display apparatus 100 accepts the connection request of the mobile device, a pairing is completed between the display apparatus 100 and the mobile device.

Bluetooth is a direct communication method between devices based on IEEE 802.15.1 standards. Bluetooth uses an industrial scientific and medical (ISM) frequency of 2400 to 2483.5MHz. However, to prevent interference with other systems using higher and lower frequencies, Bluetooth employs total 79 channels of 2402 to 2480MHz except a band as much as 2MHz after 2400MHz and a band as much as 3.5MHz before 2483.5MHz.

Since many systems use the same frequency band, electromagnetic interference is likely to occur between the systems. To prevent this, Bluetooth employs a frequency hopping technique. The frequency hopping technique is to transmit a packet (data) little by little while moving in many channels quickly in accordance with certain patterns.

Bluetooth hops over 79 assigned channels 1600 times per second. Communication is accomplished when this hopping pattern is synchronized between Bluetooth devices.

Since Bluetooth devices are connected as a master and a slave, the communication is not achieved between the two devices if the slave device is not synchronized with frequency hopping generated by the master device. Therefore, stable connection is expected without electromagnetic interferences with other systems. For reference, one master device can connect with up to seven slave devices. Here, communication between the master device and the slave device is possible, but communication between the slave devices is impossible. However, the roles of the master and the slave may be exchangeable with each other according to situations since they are not fixed.

UPNP is a protocol for connecting devices by a P2P method in accordance with digital living network alliance (DLNA). UPNP utilizes the existing protocols such as Internet protocol, tape carrier package (TCP), user datagram protocol (UDP), hypertext transfer protocol (HTTP), and extensible mark-up language (XML). UPNP is based on a wire protocol, in which information exchanged between devices is represented in the XML and communicated through the HTTP.

Wi-Fi, Bluetooth or the like protocol uses 48-bit media access control (MAC) address as a unique identifier of a communication module, whereas UPNP uses an identifier of universally unique identifier (UUID). UUID is an identifier of 16 octets, i.e. 128 bits, and is represented by 32 lowercase hexadecimal digits. UUID is a set of 32 characters or digits, represented by four hyphens, and has a total 36-digit number of "8-4-4-4-12".

NFC is one of radio-frequency identifications (RFID), which is a contactless short-range wireless communication protocol using a frequency band of 13.56MHz. NFC is a technique to exchange data between devices at a near distance of about 10cm, which is extended from ISO/IEC 14443. NFC operates based on electromagnetic induction between two adjacent loop antennas within a magnetic field.

NFC supports two modes of a passive communication mode and an active communication mode. In the passive communication mode, a starting device provides a carrier field, and a target device operates while modulating the provided fields. The target device of the passive communication mode acquires operation power from the electromagnetic field provided by the starting device, and thus the target device also serves as a transceiver. By the way, in the active communication mode, both the starting device and the target device communicate with each other by generating electric fields in itself. In the active communication mode, one device releases its own electromagnetic field until receiving data from an opponent, and activates its own electromagnetic field when transmitting data to the opponent.

Below, elements of the signal processor 160 will be described.

The deMUX (or demultiplexer) 161 performs a reverse operation of the multiplexer (not shown). That is, the deMUX 161 connects one input terminal with a plurality of output terminals, and distributes a stream input to the input terminal to the respective output terminals in accordance with selection signals. For example, if there are four output terminals with respect to one input terminal, the deMUX 161 may select each of the four output terminals by combination of selection signals having two levels of 0 and 1. In a particular case where the deMUX 161 is applied to the display apparatus 200, the deMUX 161 divides the transport stream received from the tuner 111 into the sub signals of a video signal and an audio signal and outputs them to the respective output terminals.

The deMUX 161 may use various methods to divide the transport stream into the sub signals. For example, the deMUX 161 divides the transport stream into the sub signals in accordance with packet identifiers (PID) given to packets in the transport stream. The sub signals in the transport stream are independently compressed and packetized according to channels, and the same PID is given to the packets corresponding to one channel so as to be distinguished from the packets corresponding to another channel. The deMUX 161 classifies the packets in the transport stream according to the PID, and extracts the sub signals having the same PID.

The video processor 162 decodes and scales the video signal output from the deMUX 161 and outputs it to the display 120. To this end, the video processor 162 includes a decoder (not shown) that returns the video signal to a state before an encoding process by performing an opposite process to the encoding process with regard to the video signal encoded by a certain format, and a scaler (not shown) that scales the decoded video signal in accordance with the resolution of the display 120 or a separately designated resolution. If the video signal output from the deMUX 161 is not encoded by a certain format, i.e. not compressed, the decoder (not shown) of the video processor 162 does not process this video signal.

The audio processor 163 amplifies an audio signal output from the deMUX 161 and outputs the amplified audio signal to the loudspeaker 130. To this end, the audio processor 163 includes a digital signal supplier (not shown) for outputting a digital audio signal; a pulse width modulation (PWM) processor (not shown) for outputting a PWM signal based on a digital signal output from the digital signal supplier (not shown), an amplifier (not shown) for amplifying the PWM signal output from the PWM processor (not shown), and an LC filter (not shown) for filtering the PWM signal amplified by the amplifier (not shown) by a predetermined frequency band to thereby demodulate the PWM signal.

The CPU 170 is an element including processing circuitry to operate general elements in the signal processor 160, and plays a central role in basically parsing and calculating data. The CPU 170 internally includes a processor register (not shown) in which commands to be processed are stored; an arithmetic logic unit (ALU) (not shown) being in charge of comparison, determination and calculation; a control unit (not shown) for internally controlling the CPU 170 to analyze and carry out the commands; an internal bus (not shown), a cache (not shown), etc.

The CPU 170 performs calculation needed for operating the elements of the signal processor 160, such as the deMUX 161, the video processor 162 and the audio processor 163. Alternatively, some elements of the signal processor 160 may be designed to operate without the data calculation of the CPU 170 or operate by a separate microcontroller (not shown).

Below, functional components of the display apparatus 100 according to the HbbTV platform will be described.

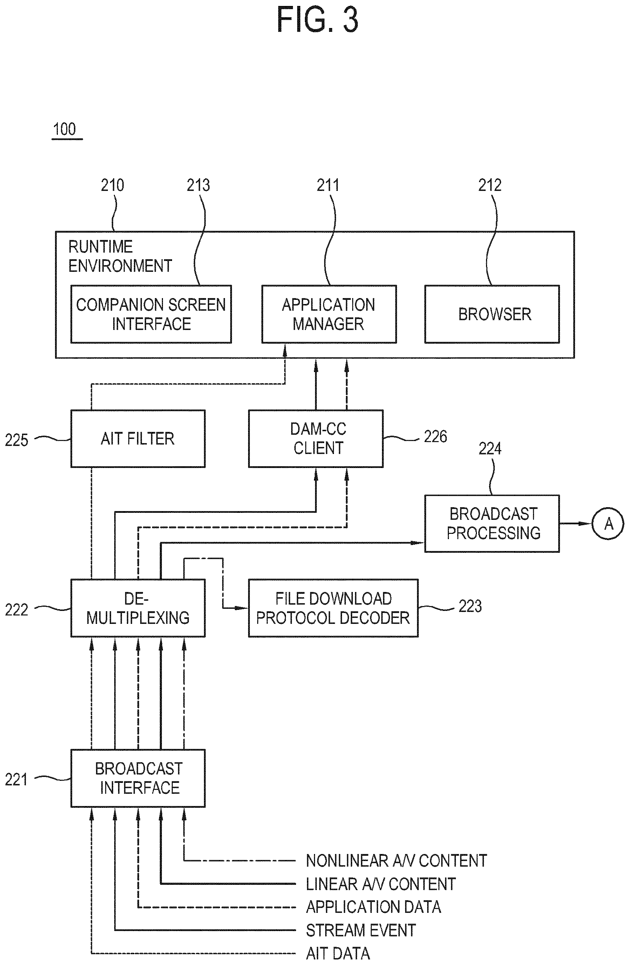

FIG. 3 is a block diagram illustrating example functional components for the broadcast network in the display apparatus 100 according to the second example embodiment.

As illustrated in FIG. 3, a runtime environment 210 for ultimately handling content data includes an application manager 211, a browser 212, and a companion screen interface 213. The display apparatus 100 includes a broadcast interface 221, de-multiplexing 222, a file download protocol decoder 223, broadcast processing 224, an AIT filter 225, and a digital storage media-command and control (DSM-CC) client 226 as elements which are involved in a process of providing content data received through the broadcast network to the runtime environment 210.

The broadcast interface 221 receives application information table (AIT) data, linear A/V content, non-real-time A/V content, application data, a stream event, etc. through the broadcast network. Here, the AIT data refers to a table in which information about the applications are recorded among content data received through the broadcast network.

The application data and the stream event are transmitted using a DSM-CC object carousel. The non-real-time content is transmitted through a file delivery protocol (FDP).

Here, the object carousel refers to a process of acquiring desired information from a received signal by periodically monitoring the received signal. On the contrary to a broadband signal, a broadcast signal is unidirectional. Therefore, when information is transmitted by using a broadcast signal as a carrier, a transmitting side does not add the information to the broadcast signal at a certain point of time but periodically adds the same information to the broadcast signal at many points of time. Therefore, a receiving side acquires the information from the broadcast signal at a certain point of time, and acquires the rest of the information from the broadcast signal at the next point of time if the acquired information is incomplete, thereby ultimately acquiring the complete information.

Thus, DSM-CC client 226 restores data from the object carousel, and the file download protocol decoder 223 restores an FDP data stream. The restored data is provided to the runtime environment 210.

The runtime environment 210 is a basic component where the application is provided and executed. The application manager 211 examines the AIT data received from the AIT filter 225 so as to control a lifecycle of the application. The browser 212 executes the application.

In general, the application is classified into two, i.e. a native application and a web application. The native application is executed on an operating system in the state that it is installed in the operating system of the display apparatus 100. On the other hand, the web application is executed on not the operating system of the display apparatus 100 but the browser 212. The native application and the web application are different from each other in the platform where an application is executed. Since the native application is executed on the operating system, an application designed corresponding to a certain operating system cannot be executed on a different operating system. On the contrary, the web application is executed on the browser 212, and therefore free from the operating system as long as it is executed on the same kind of browser 212. In this example embodiment, the application is a web-based interactive application.

The linear A/V content is processed by not a hybrid method but a method performed in a general DVB terminal. That is, the broadcast processing 224 includes all DVB functions provided by the general DVB terminal. In addition, the broadcast processing 224 may provide some pieces of information and functions, such as channel list information, event information table present/following (EIT p/f), tuning information, etc. to the runtime environment 210.

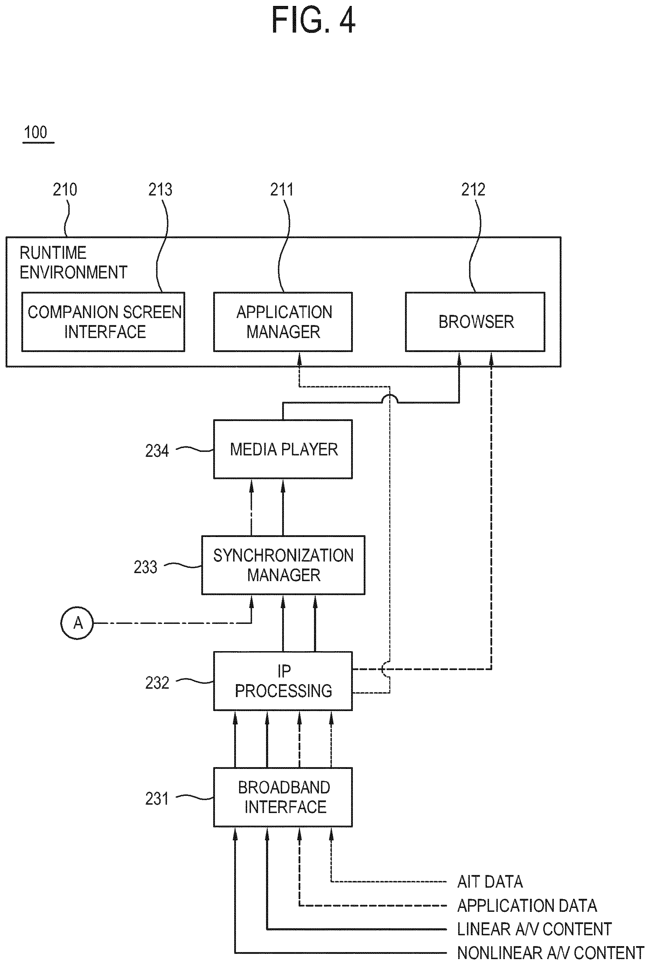

FIG. 4 is a block diagram illustrating example functional components for a broadband network in the display apparatus 100 according to the second example embodiment.

As illustrated in FIG. 4, the display apparatus 100 includes a broadband interface 231, IP processing 232, a synchronization manager 233 and a media player 234 as elements which are involved in a process for providing content date received through the broadband network to the runtime environment 210.

The broadband interface 231 is connected to the Internet. Such a connection provides another method of making a request for also the application data through servers of application providers as well as A/V content. The IP processing 232 includes general functions for handling data received from the Internet, and the application data is provided to the runtime environment 210 through the IP processing 232.

The media player 234 is controlled by the runtime environment 210 to apply scaling and embedding to A/V content on a user interface provided by an application. The synchronization manager 233 combines with the media player 234, and synchronizes certain content transmitted through the broadband interface 231 with different content transmitted through the broadcast interface 221 (see FIG. 3) or the broadband interface 231.

The companion screen interface 213 makes the display apparatus 100 find out the external device or the external device find out the display apparatus 100. By the companion screen interface 213, the interactive applications executed on the browser 212 may be installed or executed in the external device.

With this structure, the display apparatus 100 receives various kinds of content from various content sources and displays an image.

As one among many services to be offered by the display apparatus 100, there is a service of automatically executing an application while a certain content image is being displayed on the display apparatus, and this service will be called an application auto-executing service for convenience.

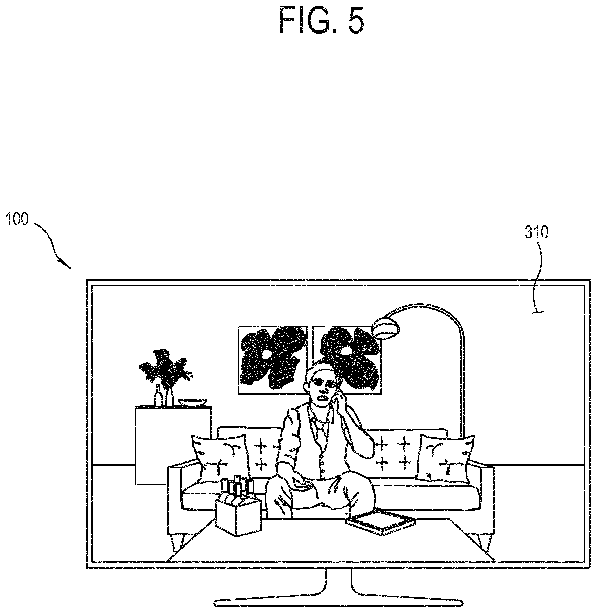

Below, the application auto-executing service will be described. FIG. 5 to FIG. 8 are diagrams illustrating example images displayed as an application auto-executing service is executed in a display apparatus 100 according to a third example embodiment.

As illustrated in FIG. 5, the display apparatus 100 according to the third example embodiment receives content data from a content provider and displays a content image 310. The content data of the content image 310 may be the linear A/V content received in the display apparatus 100 through the broadcast network.

As an example of this type content, there is a broadcast signal transmitted from a transmitter of a broadcasting station by a terrestrial method, a cable, a satellite, etc. The display apparatus 100 is tuned to a certain channel of a received broadcast signal, and thus displays a broadcast image 310 of the tuned channel.

While displaying the broadcast image 310, the display apparatus 100 may be instructed by the broadcasting station, e.g., the content provider to execute a certain application. Such an instruction of the content provider may be received in various ways.

For example, an instruction may be embedded in the AIT data transmitted from the content provider.

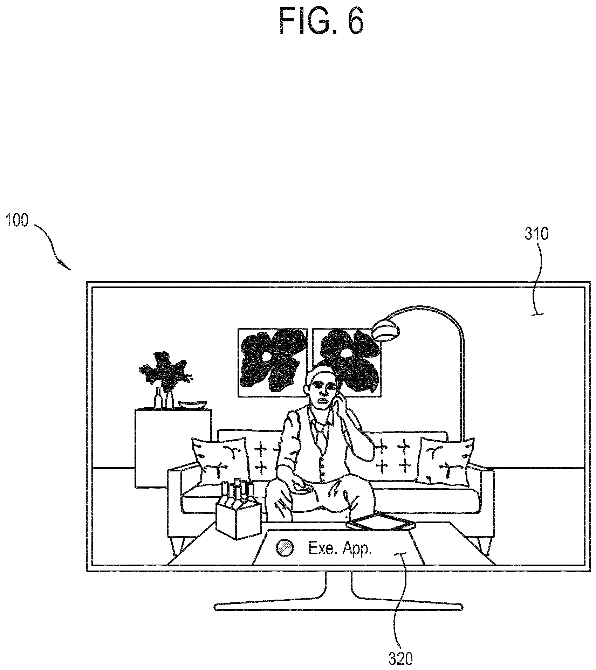

As illustrated in FIG. 6, the display apparatus 100 may display the content image 310 overlaid with a prompt message 320 for guiding a user to execute the application, in response to the instruction for executing the application from the content provider.

For example, if the application is a web page including information related to the content of the broadcast image 310, the display apparatus 100 displays the prompt message 320, i.e. a user interface (UI) for proposing the execution of the application or guiding how to execute the application, on a lower side of the broadcast image 310. The prompt message 320 may for instance include a title of an application, and an object visually showing a button to be pressed by a user on a remote controller in order to execute the application. The execution of the application may be performed as a user presses the button guided by the prompt message 320 or selects the prompt message 320.

If a user selects the execution of the application while following the guidance of the prompt message 320, the display apparatus 100 executes the application in response to the user's selection.

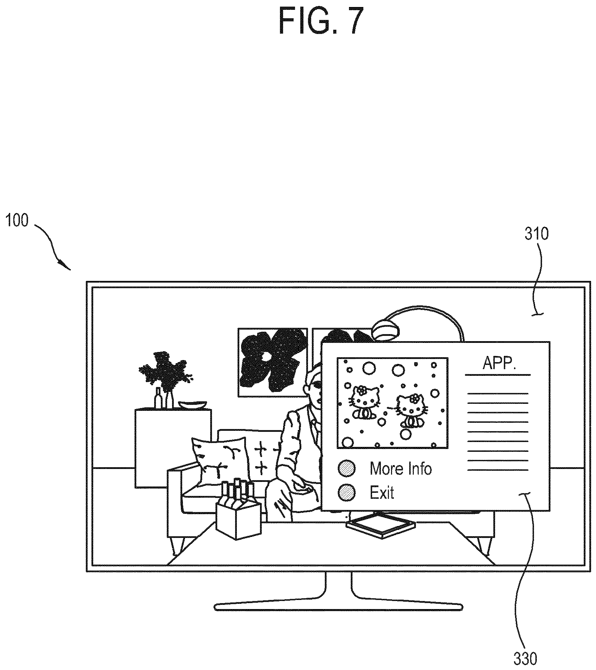

As illustrated in FIG. 7, the display apparatus 100 executes the application to display an application image 330 on the content image 310. For example, the display apparatus 100 executes a browser while displaying the broadcast image 310, so that a web page 330 can be displayed on the broadcast image 310. The application image 330 is displayed as it is overlaid or popped up on the content image 310.

The application image 330 may be displayed in response to a user's input with regard to the prompt message 320 (see FIG. 6). Besides, the application image 330 may be automatically displayed on the display apparatus 100 without previously displaying the prompt message 320 (see FIG. 6) while only the content image 310 is displayed as illustrated in FIG. 5.

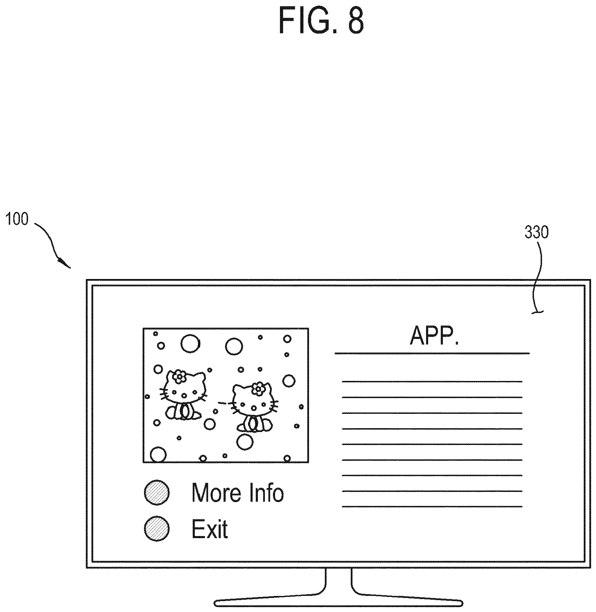

As illustrated in FIG. 8, the display apparatus 100 may display the application image 330 on a full screen. In this case, the application image 330 is fully displayed on an effective display area of the display apparatus 100, and therefore the content image 310 (see FIG. 7) is not displayed on the contrary to that of FIG. 7.

Below, a process that the display apparatus 100 according to the third example embodiment executes the application auto-executing service will be described.

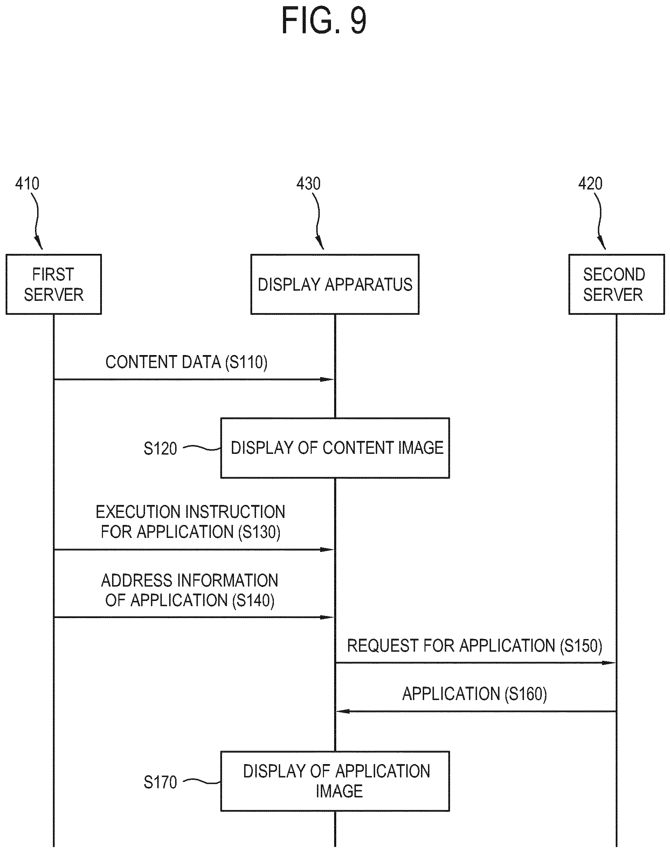

FIG. 9 is a diagram illustrating example signal exchange while a display apparatus 430 according to a fourth example embodiment executes the application auto-executing service. In this example embodiment, a first server 410 provides content through the broadcast network, and a second server 420 provides content through the broadband network.

As illustrated in FIG. 9, at operation S110 the first server 410 provides content data to the display apparatus 430.

At operation S120, the display apparatus 430 processes content data to be displayed as a content image.

At operation S130, the first server 410 instructs the display apparatus 430 to execute the application. At this time, at operation S140 the first server 410 transmits address information about the application to the display apparatus 430 so that the display apparatus 430 can acquire the application.

The address information about the application is embedded in the AIT data to be transmitted together with content data, and may for example include uniform resource locator (URL) information.

At operation S150, the display apparatus 430 has an access to the second server 420 in accordance with the address information of the application and makes a request for the application.

At operation S160, the second server 420 transmits the application to the display apparatus 430 in response to the request from the display apparatus 430.

At operation S170, the display apparatus 430 executes the application and displays an application image.

Like this, the display apparatus can offer the application auto-executing service that the application is automatically executed under control of the content provider without manipulation of a user. In the application auto-executing service, the application image may be automatically displayed as illustrated in FIG. 7 and FIG. 8, or the prompt message may be automatically previously displayed as illustrated in FIG. 6.

Such an application auto-executing service is basically made and provided by the content provider. Although the content provider makes and provides the service in accordance with previously designated standards, an error may occur when the service is executed in the display apparatus. In general, such an error may occur when the service fails to meet the standards or when some among many codes for executing the service are not linked with the display even though the service meets the standards.

In particular, the display apparatus has limits to cope with services provided by all the content providers as the number of content providers increases. Further, it is not easy for a manufacturer of the display apparatus to deal with a service offered after the display apparatus is released.

Accordingly, the error caused by the execution of the service has to be ultimately solved by the content provider that offers the service. The content provider modifies the service by finding out the cause of the error from the service and provides the modified service again.

By the way, it needs certain time to modify the service where an error occurs and provide the modified service again by the content provider. While the service is modified, the service offered by the content provider continuously causes an error in the display apparatus.

Thus, the display apparatus itself needs to have a method of blocking an application auto-executing service if the application auto-executing service causes an error, and this method will be described.

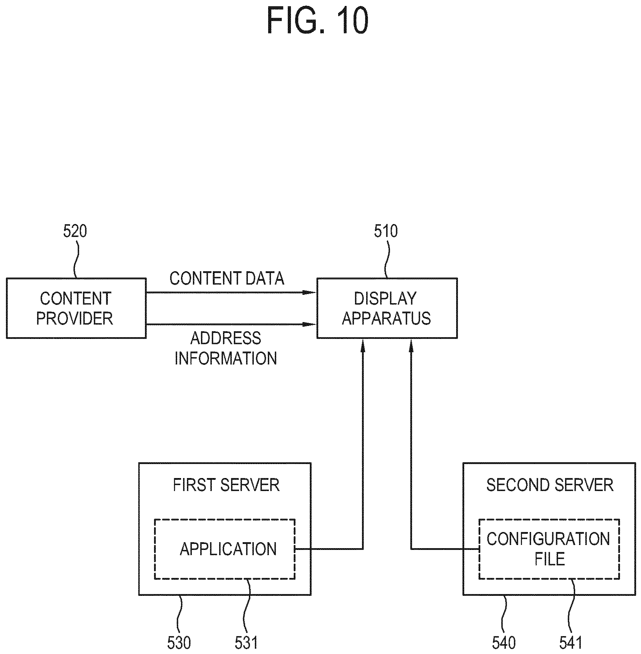

FIG. 10 is a diagram illustrating an example principle of blocking the application auto-executing service in a display apparatus 510 according to a fifth example embodiment.

As illustrated in FIG. 10, a display apparatus 510 according to the fifth example embodiment receives content data from a content provider 520. Further, the display apparatus 510 communicates with a first server 530 where an application 531 is stored, and a second server 540 where a configuration file 541 provided for blocking the execution of the application 531 is stored.

The content provider 520 provides a push-type content through the broadcast network. The first server 530 provides the application 531 or the like content through the broadband. While the content provider 520 and the first server 530 are providing the content, the second server 540, which is for example managed by the manufacturer of the display apparatus 510, is provided to do various supports for maintenance of the display apparatus 510.

The display apparatus 510 receives and stores the configuration file 541 from the second server 540. The configuration file 541 is prepared by an operator or manager of the second server 540, and blocks the execution of the application 531 designated by a service offered by the content provider 520 if the service is reported as causing an error.

The display apparatus 510 has many ways of receiving the configuration file 541. For example, the second server 540 may automatically updates a register (not shown) of the display apparatus 510, or the display apparatus 510 may make a request for the configuration file 541 to the second server 540 in response to a certain event. In the former case, the second server 540 may automatically updates the operating system or software of the display apparatus 510. In this case, the configuration file 541 may be stored in the display apparatus 510.

In the state that the configuration file 541 is stored, the display apparatus 510 processes the content data received from the content provider 520 and displays a content image based on the processed content data. Here, the content provider 520 controls the display apparatus 510 to execute the application auto-executing service in the display apparatus 510. The content provider 520 transmits the address information of the application 531 together with the content data to the display apparatus 510 so that the display apparatus 510 can acquire the application 531 designated by the application auto-executing service.

The display apparatus 510 determines the location of the application 531 on Internet, based on the address information received from the content provider 520.

The reason why the application 531 is provided by not the content provider 520 but the separate first server 530 is because there is a limit to a data transmission amount in a frequency band for transmitting content data through the broadcast network. The content provider 520 transmits the content data through the broadcast network, i.e. transmits the address information of the application 531 instead of the application 531. Thus, the content provider 520 makes additional content such as the application 531 be provided from the separate first server 530 through the broadband network.

The display apparatus 510 accesses the application 531 stored in the first server 530, based on the address information provided from the content provider 520, in accordance with the execution of the service. The display apparatus 510 determines whether the previously stored configuration file 541 blocks the execution of the application 531 when it is desired to execute the application 531 from the first server 530.

If the configuration file 541 is not set to block the execution of the application 531, the display apparatus 510 automatically executes the application 531 and displays the image of the application 531.

On the other hand, the configuration file 541 is set to block the execution of the application 531, the display apparatus 510 blocks the execution of the application 531. In addition, the display apparatus 510 may inform a user that the execution of the application 531 is blocked.

Thus, if the application 531 satisfies the blocking condition designated in the configuration file 541 while the automatic-execution service of the application 531 provided by the content provider 520 is carried out, the display apparatus 510 blocks the execution of the application 531 and does not display the image of the application 531.

Thus, if it is determined that the application 531 designated in the application auto-executing service by the content provider 520 causes an error in the display apparatus 510, it is possible to prevent an error from occurring due to the execution of the application 531.

In this example embodiment, a point of time when the display apparatus 510 acquires the configuration file 541 is before a point of time when the content provider 520 gives an instruction to execute the application auto-executing service. However, there are no limits to the point of time when the display apparatus 510 acquires the configuration file 541. Alternatively, the point of time when the display apparatus 510 acquires the configuration file 541 may be after the point of time when the content provider 520 gives an instruction to execute the application auto-executing service and before the point of time when the display apparatus 510 has an access to the application 531.

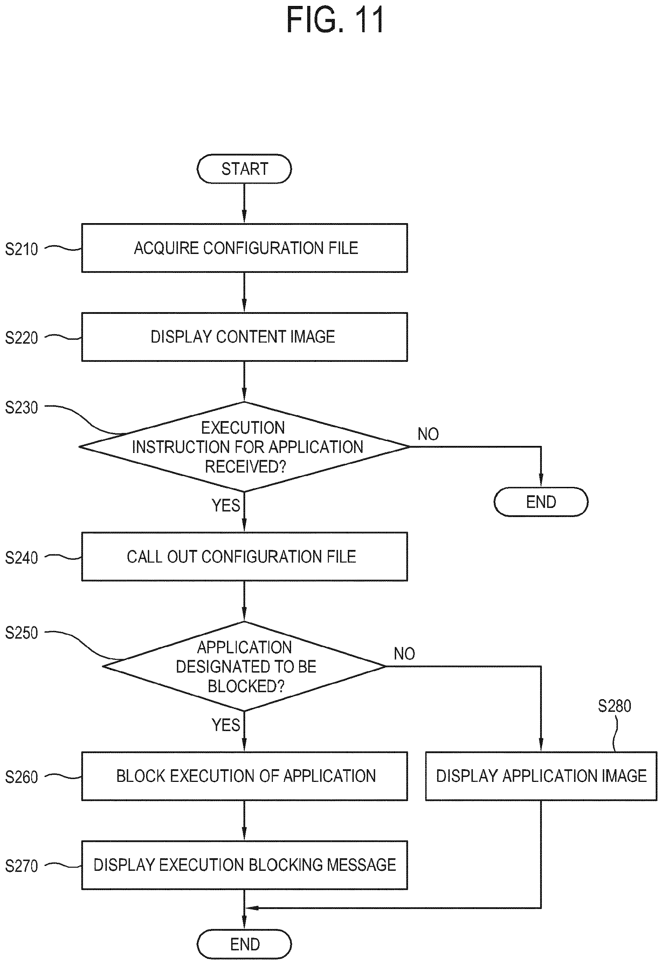

FIG. 11 is a flowchart illustrating an example of executing the application auto-executing service in the display apparatus according to the fifth example embodiment.

As illustrated in FIG. 11, at operation S210, the display apparatus acquires and stores the configuration file for designation to block the execution of the application.

At operation S220, the display apparatus receives content data from the content provider and displays a content image.

At operation S230, the display apparatus determines whether the content provider gives an instruction to execute the application.

If receiving the instruction for executing the application, at operation S240 the display apparatus calls out the configuration file.

At operation S250, the display apparatus determines whether the configuration file is designated to block the execution of the application.

If it is determined that the configuration file is set to block the execution of the application, at operation S260 the display apparatus blocks the execution of the application. Further, at operation S270 the display apparatus displays a message of informing that the execution of the application is blocked.

On the other hand, if it is determined that the configuration file is not set to block the execution of the application, at operation S280 the display apparatus executes the application and displays the application image.

Thus, the display apparatus prevents an application, which may cause an error, from being automatically executed by the content provider without a user's manipulation.

Below, the configuration file and the execution block message for the application will be described.

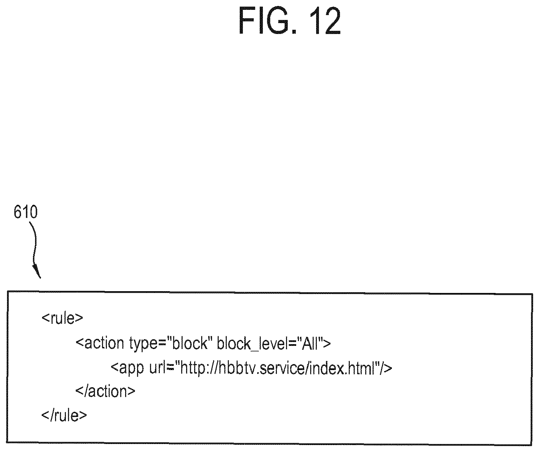

FIG. 12 illustrates an example of a configuration file 610, in which an application is designated to be blocked, referred to by a display apparatus according to a sixth example embodiment.

As illustrated in FIG. 12, the display apparatus according to the sixth example embodiment may receive and store the configuration file 610 set to block execution of a certain application from a separate server. As described in the foregoing embodiments, the display apparatus calls out the configuration file 610 when the application auto-executing service is executed by the content provider, and blocks the execution of the application if the configuration file 610 is designated to block the application corresponding to the service.

The configuration file 610 may be given in various forms without limitations as long as it meets various standards prepared to be referred to by the display apparatus. In this example embodiment, the configuration file 610 has a format of XML, but not limited thereto.

For example, the configuration file 610 expresses standard requirements with a "rule" tag, and detailed operations with an "action" tag. In the "action" tag, "type" refers to an attribute to express what operation will be executed. For example, "type=block" expresses a blocking operation. This blocking operation is to block an application corresponding to address information indicated by "url" of an "app" tag.

In the "action" tag, "block_level" refers to an attribute to designate what level the application will be blocked at. For example, "block_level=All" means that the application is fully blocked.

That is, the configuration file 610 according to this example embodiment instructs that execution of an application located at Internet address of "http://hbbtv.service/index.htm" be fully blocked.

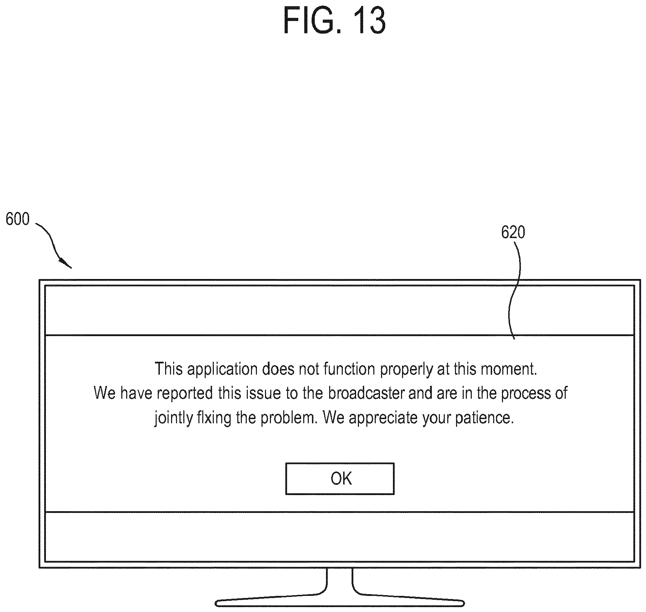

FIG. 13 is a diagram illustrating an example execution block message 620 displayed when the display apparatus 600 according to the sixth example embodiment blocks the application with reference to the configuration file of FIG. 12.

As illustrated in FIG. 13, the display apparatus 600 blocks the execution of the application, and displays the execution block message 620 that the application is blocked.

The execution block message 620 informs a user that the application does not properly function and thus the content provider is modifying the application. This embodiment is nothing but an example, and is not construed to limit the disclosure.

According to this example embodiment, the execution block message 620 may be displayed when the application is filly blocked without asking for a user's intention.

Although the application is designated to be fully blocked, the application may be selectively blocked by a process of asking a user about whether to block the application. In this regard, an embodiment will be described below.

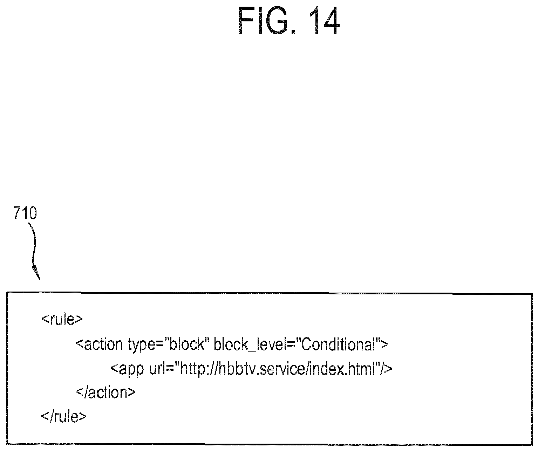

FIG. 14 illustrates an example of a configuration file 710, in which an application is designated to be blocked, referred to by a display apparatus according to a seventh example embodiment.

As illustrated in FIG. 14, the display apparatus according to the seventh example embodiment may receive and store the configuration file 710 set to block execution of a certain application from a separate server. As described in the foregoing embodiments, the display apparatus calls out the configuration file 710 when the application auto-executing service is executed by the content provider, and blocks the execution of the application if the configuration file 710 is set to block the application corresponding to the service.

The configuration file 710 has the same format as defined with reference to FIG. 12. However, the configuration file 710 of this embodiment is different from that of FIG. 12 in that "block_level" for designating what level the application will be blocked at has an attribute of "Conditional". On the contrary to "block_level=All" for fully blocking the application, "block_level=Conditional" allows a user to select whether to block the application.

That is, the configuration file 710 according to this example embodiment displays a UI for allowing a user to select whether to block the execution of the application located at Internet address of "http://hbbtv.service/index.htm".

The foregoing configuration file designates three pieces of information in connection with the application, i.e. information about whether to block the application, what level the application will be blocked, and a blocking range of the application.

The information about whether to block the application is to designate whether to block the application. For example, the configuration file may have an attribute of "type=block" when it is desired to block the application.

The information about the level of blocking the application is to designate whether to fully block the application or allow a user to select the blocking level. For example, the configuration file has an attribute of "block_level=All" when it is desired to unconditionally block the application, and an attribute of "block_level=Conditional" when a user is allowed to select whether to block the application.

The information about the blocking range of the application is to designate what kind of applications a user wants to block. That is, the information about the blocking range of the application specifies which applications will be blocked among innumerable applications that are available on Internet by the display apparatus. This information may include the address information such as URL as described above, identification (ID) of the application, and ID of a provider that provides the application.

In the foregoing embodiment, an "app url" tag indicates the URL of the application. If it is desired to indicate the ID of the application, an "app id" tag may for example be used. These attributes are defined by the standards and not construed to limit the disclosure.

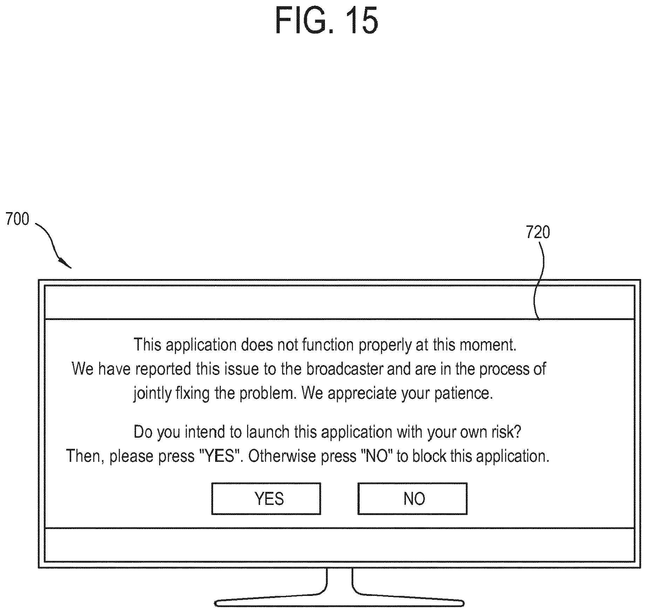

FIG. 15 is a diagram illustrating an example execution block message 720 displayed when the display apparatus 700 according to the seventh example embodiment blocks the application with reference to the configuration file of FIG. 14.

As illustrated in FIG. 15, the display apparatus 700 blocks the execution of the application and displays an execution block message 720 informing that the execution of the application is blocked. The execution block message 720 informs a user that the application does not properly operate and is thus being modified by the content provider.

Here, the execution block message 720 according to this example embodiment displays options for allowing a user to select whether to block the application. In connection with these options, the display apparatus 700 executes the application when a user selects the execution of the application on the execution block message 720, or blocks the application when a user selects the block of the application on the execution block message 720.

Thus, the display apparatus 700 authorizes a user to execute the application even though the display apparatus 700 finds out the application as the cause of the error.

In the foregoing example embodiments, the content provider provides content data to the display apparatus through the broadcast network and the display apparatus acquires the application through the broadband network in accordance with the address information provided by the content provider, but the disclosure is not limited thereto.

Alternatively, the content provider may provide both the content data and the application through the broadcast network. Below, this example embodiment will be described.

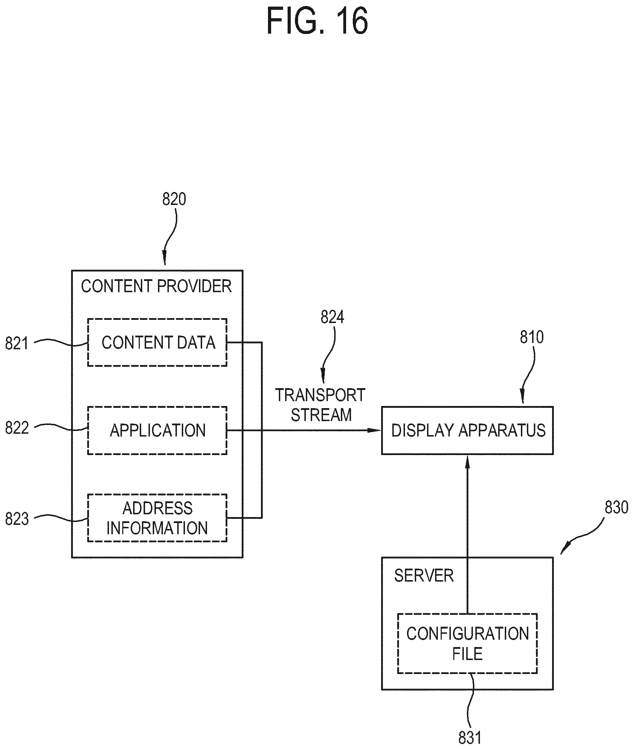

FIG. 16 is a diagram illustrating an example of blocking the application auto-executing service in a display apparatus 810 according to an eighth example embodiment.

As illustrated in FIG. 16, the display apparatus 810 according to the eighth example embodiment communicates with a content provider 820 that provides content data 821, and a server 830 that provides a configuration file 831.

The content provider 820 provides not only the content data 821 but also an application 822 to the display apparatus 810. For example, the content provider 820 includes the transmitter of the broadcasting station, and sends the display apparatus 810 the content data 821, the application 822 and a transport stream 824 where address information 823 of the application 822 is packaged.

The display apparatus 810 receives and stores the configuration file 831 from the server 830. The configuration file 831 is equivalent to those of the foregoing example embodiments, and thus repetitive descriptions thereof will be avoided.

The display apparatus 810 extracts the content data 821 from the transport stream 824 and displays a content image. The display apparatus 810 calls out the stored configuration file 831 when an event occurs to start the auto-executing service of the application 822, and determines whether or not the application 822 is designated to be blocked. In accordance with the determination, the display apparatus 810 optionally blocks the execution of the application 822.

Here, the event for starting the auto-execution of the application 822 may be given in many ways. For example, the content provider 820 may set an auto-executing time of the application 822 in the AIT data of the transport stream 824. The display apparatus 810 acquires information about the address and executing time of the application from the AID data extracted from the transport stream 824.

The application 822 is included in the transport stream 824, and thus the display apparatus 810 extracts the application 822 from the transport stream 824 based on the address information 823 of the application 822. Here, the address information 823 conforms to a protocol different from URL in the broadband network, and specifies the time and frequency of the transport stream 824 of transmitting the application 822 in the broadcast network. For instance, the display apparatus 810 may use the object carousel to acquire the application 822 from the transport stream 824.

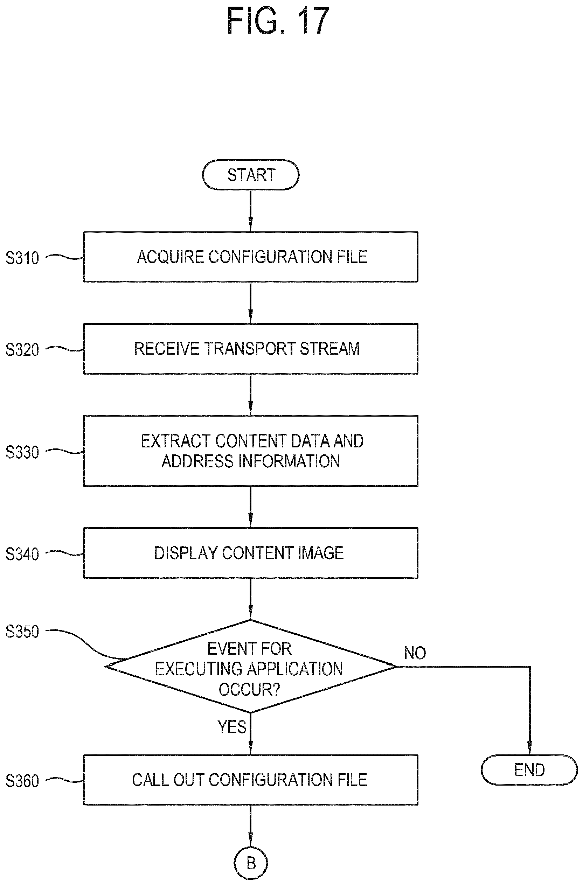

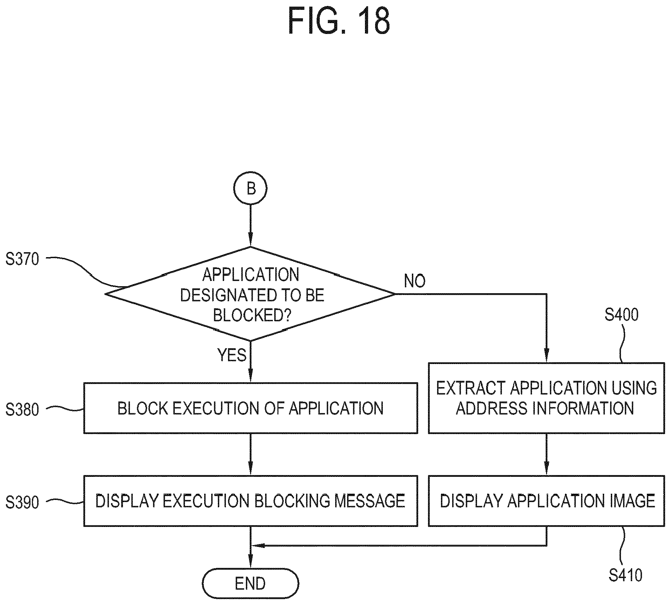

FIG. 17 and FIG. 18 are a flowchart illustrating an example of executing the application auto-executing service in the display apparatus according to the eighth example embodiment.

As illustrated in FIG. 17, at operation S310, the display apparatus acquires and stores the configuration file set to block the application.

At operation S320, the display apparatus receives a transport stream from the content provider.

At operation S330, the display apparatus extracts the content data and the address information from the transport stream.

At operation S340, the display apparatus processes the content data and displays the content image.

At operation S350, the display apparatus determines whether an event for executing the application occurs or not.

If it is determined that the event occurs to execute the application, at operation S360 the display apparatus calls out the configuration file.

As illustrated in FIG. 18, at operation S370 the display apparatus determines whether the configuration file designates the corresponding application to be blocked.

If it is determined that the application is designated to be blocked, at operation S380 the display apparatus blocks the application of the previously extracted address information. Then, at operation S390 the display apparatus displays a message of informing that the execution of the application is blocked.

On the other hand, if it is determined that the application is not designated to be blocked, at operation S400 the display apparatus extracts and acquires the application from the transport stream in accordance with the address information extracted as above.

At operation S410, the display apparatus executes the acquired application and displays the application image.

Thus, the display apparatus optionally blocks the execution of the application provided by the content provider.

In the foregoing example embodiments, the operator or manager of the server, which provides a configuration file, prepares the configuration file and provides it to the display apparatus through the server. Alternatively, processes of designating applications targeted to be blocked among innumerable applications that are available on Internet by the display apparatus, and creating a configuration file of reflecting this designation may be automatically performed in accordance with design of a platform. In this regard, an example embodiment will be described below.

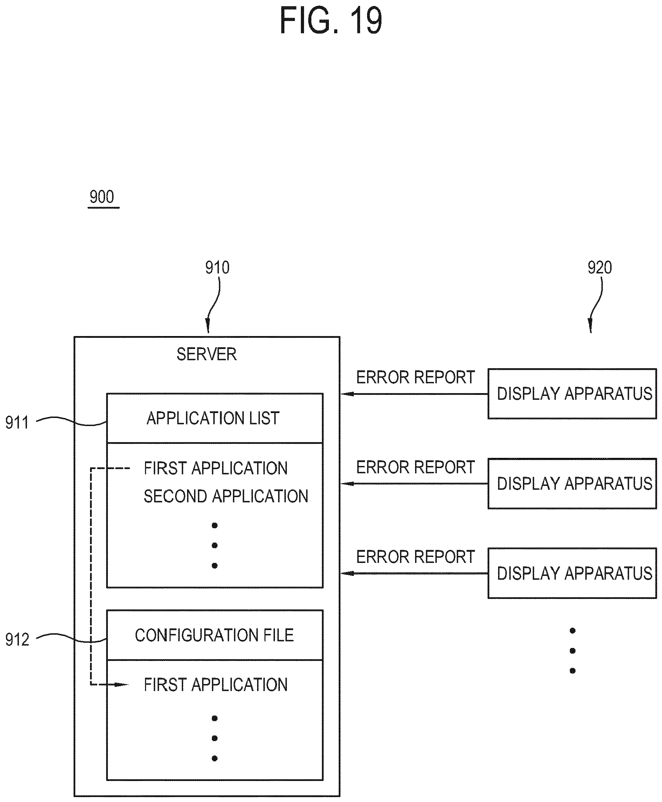

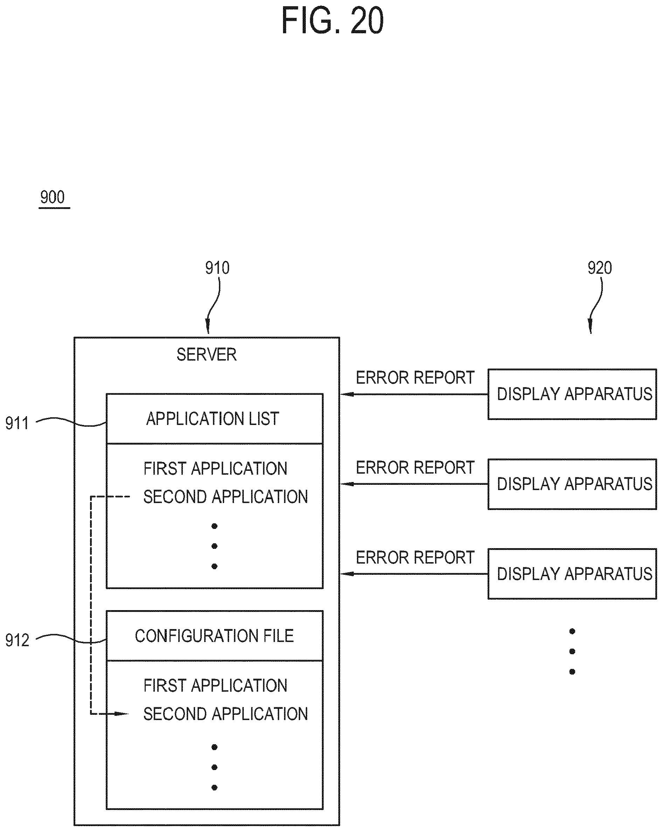

FIG. 19 and FIG. 20 are diagrams illustrating an example principle that a server 910 generates a configuration file 912 in a system 900 according to a ninth example embodiment.

As illustrated in FIG. 19, the system 900 according to the ninth example embodiment includes the server 910, and the plurality of display apparatuses 920 connected to and communicating with the server 910. The server 910 supports the display apparatus 920 for the maintenance of the display apparatus 920. In this example embodiment, the server 910 creates a configuration file 912 set to block a certain application that may make a trouble, and provides it to each display apparatus 920.

Details of the configuration file 912 are equivalent to those of the foregoing example embodiments, and thus repetitive description thereof will be avoided as necessary. In this example embodiment, an example of generating the configuration file 912 will be described.

The server 910 receives an error report on a certain application from each display apparatuses 920. For example, if an error is caused by a first application in a certain display apparatus 920, the display apparatus 920 sends the error report on the first application to the server 910. The server 910 makes an application list 911, where the number of times the error reports on the application are received is recorded, based on the error reports received from each display apparatus 920.

In the application list 911, the title of the application, and the number of times the error reports on the corresponding application are received are recorded. The server 910 updates the application list 911 in accordance with the error reports from the display apparatus 920.

If the number of times the error reports on the application are received from the plurality of display apparatuses 920 is greater than a preset value, the server 910 creates the configuration file 912 to block the application. For example, if a threshold about the number of times the error reports are received is '50' and the number of times the error reports on the first application are received from each display apparatus 920 is greater than the threshold of '50,' the server 910 generates the configuration file 912 so that the first application can be designated to be blocked. Further, the server 910 sends the configuration file 912 to the respective display apparatuses 920 so that the execution of the first application can be blocked in the display apparatus 920.

As illustrated in FIG. 20, the application designated to be blocked in the configuration file 912 is not the only one. After the first application is designated to be blocked in the configuration file 912, the server 910 continues to receive error reports on many applications from the respective display apparatuses 920.

For example, if it is determined that the number of times the error reports on the second application are received is greater than the threshold, the server 910 updates the configuration file 912 to block both the first application and the second application.

Further, the server 910 distributes the updated configuration file 912 to the respective display apparatuses so that the first application and the second application cannot be executed in the display apparatus 920.

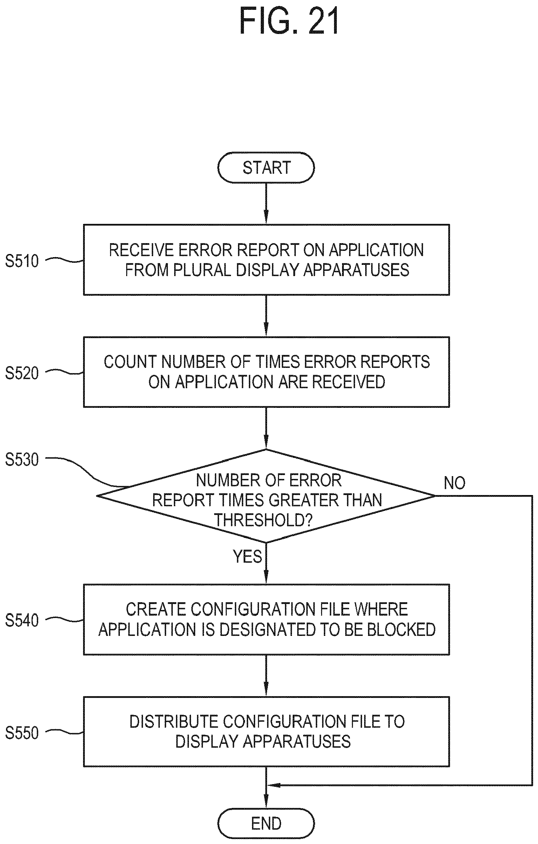

FIG. 21 is a flowchart illustrating an example of making a configuration file out by the server according to the ninth example embodiment.

As illustrated in FIG. 21, at operation S510, the server receives error reports on an application from a plurality of display apparatuses.

At operation S520, the server counts the number of times the error reports on the application are received.

At operation S530, the server determines whether the number of times the error reports on the application are received is greater than a preset threshold.

If the number of times the error reports are received is greater than the preset threshold, at operation S540 the server creates a configuration file set to block the corresponding application.

At operation S550, the server distributes the created configuration file to the plurality of display apparatuses.

Thus, the server automatically generates a configuration file for blocking an application reported as causing an error.

In the foregoing example embodiments, the number of times the error reports on the application are received from the respective display apparatuses is counted.

Alternatively, the display apparatus may give grades corresponding several levels to operating states of an application, and send the grades to the server. If a total of grades given to an application by each display apparatus is greater than a threshold, a server creates the configuration file to block the application.

The methods according to the foregoing example embodiments may be achieved in the form of a program command that can be implemented in various computers, and recorded in a computer readable medium. Such a computer readable medium may include a program command, a data file, a data structure or the like, or combination thereof. For example, the computer readable medium may be stored in a voltage or nonvolatile storage such as a read only memory (ROM) or the like, regardless of whether it is deletable or rewritable, for example, a RAM, a memory chip, a device or integrated circuit (IC) like memory, or an optically or magnetically recordable or machine (e.g., a computer)-readable storage medium, for example, a compact disk (CD), a digital versatile disk (DVD), a magnetic disk, a magnetic tape or the like. It will be appreciated that a memory, which can be included in a mobile terminal, is an example of the machine-readable storage medium suitable for storing a program having instructions for realizing the example embodiments.

The program command recorded in this storage medium may be specially designed and configured according to the example embodiments, or may be publicly known and available to those skilled in the art of computer software.

Although various example embodiments have been illustrated and described, it will be appreciated by those skilled in the art that changes may be made in these example embodiments without departing from the principles of the invention, the scope of which is defined in the appended claims.

## Claims

1. A display apparatus comprising:
a display;
a receiver configured to receive a broadcast signal comprising broadcast content and source information of service content corresponding to the broadcast content; communication circuitry configured to communicate with a server that provides the service content;
at least one processor configured:
to process the broadcast content received by the communication circuitry to be displayed as an image on the display,
to display an image of the service content received using the source information from the server on the display while displaying the image of the broadcast content if it is determined, based on preset setting information, that the service content is allowed to be provided, and
to prevent the image of the service content from being displayed while displaying the image of the broadcast content if it is determined, based on the setting information, that the service content is not allowed to be provided.

2. The display apparatus according to claim 1, wherein the setting information is set to block the source information of the service content, which is used by the at least one processor in acquiring the service content, so as to prevent the image of the service content from being displayed.

3. The display apparatus according to claim 1 or 2, wherein the source information comprises at least one of address information of the service content, identification (ID) of the service content, and ID of a provider of the service content.

4. The display apparatus according to claim 1, 2 or 3, wherein
the receiver is configured to receive the broadcast signal through a unidirectional communication network, and
the communication circuitry is configured to access the server through a bidirectional communication network.

5. The display apparatus according to any one of the preceding claims, wherein the source information is recorded in application information table (AIT) data to be received by the receiver.

6. The display apparatus according to any one of the preceding claims, wherein the at least one processor is configured to display on the display a message providing a notification that a display of an image of the service content is blocked, if the setting information is set to block the display of the image of the service content.

7. The display apparatus according to any one of the preceding claims, wherein the at least one processor is configured to display on the display a user interface (UI) configured to allow a selection of whether to display an image of the service content, if the setting information is set to select whether to display the image of the service content.

8. The display apparatus according to any one of the preceding claims, wherein the service content comprises a web application to be executed on a browser program.

9. The display apparatus according to any one of the preceding claims, wherein the setting information is updated in real time with a list of the service content to be blocked, by a maintenance server that is configured to communicate with the communication circuitry.

10. The display apparatus according to claim 9, wherein the service content designated to be blocked in the setting information comprises service content, having a number of report times greater than a preset threshold, within service content reported to the maintenance server as causing an error.

11. A method of controlling a display apparatus, the method comprising:
receiving a broadcast signal comprising broadcast content and source information of service content corresponding to the broadcast content, and displaying an image of the broadcast content;
displaying an image of the service content received using the source information from the server while displaying the image of the broadcast content if it is determined,
based on preset setting information, that the service content is allowed to be provided; and
preventing the image of the service content from being displayed while displaying the image of the broadcast content if it is determined, based on the setting information, that the service content is not allowed to be provided.

12. The method according to claim 11, wherein the setting information is set to block the source information of the service content, which is used in acquiring the service content, so as to prevent the image of the service content from being displayed.

13. The method according to claim 11 or 12, wherein the display apparatus receives the broadcast signal through a unidirectional communication network, and accesses the server through a bidirectional communication network.

14. The method according to claim 11, 12 or 13, wherein the setting information is updated in real time with a list of the service content to be blocked, by a maintenance server that communicates with communication circuitry of the display apparatus.

15. The method according to claim 14, wherein the service content designated to be blocked in the setting information comprises service content, having a number of report times greater than a preset threshold, within service content reported to the maintenance server as causing an error.
